# EUROPEAN PATENT APPLICATION

(11) **EP 4 190 867 A1**
(43) Date of publication of application: **07.06.2023**
(21) Application number: 21851195.4
(22) Date of filing: 19.05.2021
(51) Int. Cl.: C09D 11/101

(54) **ACTIVE ENERGY RAY-CURABLE INK COMPOSITION FOR OFFSET PRINTING**

(30) Priority: 29.07.2020 JP 2020128425
(71) Applicant: Sakata INX Corporation, Osaka-shi, Osaka 550-0002 (JP)
(72) Inventor: KANEKO, Toru, Osaka-shi, Osaka 550-0002 (JP); HISHINUMA, Keishiro, Osaka-shi, Osaka 550-0002 (JP); NAGANUMA, Kousuke, Osaka-shi, Osaka 550-0002 (JP); OMI, Naoki, Osaka-shi, Osaka 550-0002 (JP); KUGENUMA, Risa, Osaka-shi, Osaka 550-0002 (JP)
(74) Representative: V.O.
(86) International application number: PCT/JP2021/019042
(87) International publication number: WO 2022/024512

(57) **Abstract**

[Object]

To provide an active energy ray-curable ink composition for offset printing that exhibits superior properties comparable to ink compositions containing trimethylolpropane triacrylate (TMPTA), regardless of containing no TMPTA:

[Solution]

The object described above can be achieved through preparation of an active energy ray-curable ink composition for offset printing which contains at least one selected from the group consisting of diallyl phthalate resin, polyfunctional polyester acrylate, and rosin-modified alkyd resin having an sp value of 9.0 to 11.0 (cal/cm³)^{1/2}, and contains ethylene oxide (EO)-modified TMPTA monomers having one to nine EO units in the molecule.

## Description

### TECHNICAL FIELD

The present invention relates to an active energy ray-curable ink composition for offset printing.

### BACKGROUND ART

Offset printing is a printing process that utilizes the water repellency of an oilbased offset ink composition (hereinafter, also referred to as "ink composition" or merely "ink" as appropriate). The offset printing process is characterized in that an even printing plate with lipophilic image portions and hydrophilic non-image portions is used unlike a relief printing process using an uneven printing plate. At the beginning of the printing process using such an even printing plate, the printing plate is moistened with a dampening solution to form water films on the surfaces of non-image portions, and the printing plate is then supplied with the ink composition. In this step, the ink composition supplied does not spread to the non-image portions covered by the water films due to the repellency, and stays only on the lipophilic image portions. Through this step, an image of the ink composition is formed on the surface of the printing plate, and the image is sequentially transferred onto a blanket and then a paper sheet to complete printing.

Besides the offset printing process using the dampening solution as described above, a dry offset printing process has also been put into practical use with a printing plate having non-image portions composed of silicone resin. In this printing process, non-image portions are formed not by repellency of the ink composition to the dampening solution, but by repellency of the ink composition to the silicone resin. Apart from these differences, the dry offset printing is also a printing process common to the offset printing with the dampening solution. Accordingly, the term "offset printing" is used in this specification as a concept including not only a wet printing process with a dampening solution but also a dry printing process without the solution.

If the ink composition adhering to the surfaces of printed sheets produced by the offset printing is insufficiently dried, set-off occurs when the printed sheets are stacked, or the ink composition adheres to fingers with which the printed sheets are touched, thereby the printed sheets cannot be transferred to a subsequent step or commercially distributed as products. Accordingly, a step of drying the ink composition adhering to the surfaces of printed sheets is required after the step of printing. In order to perform such a step of drying in a shorter time, printing processes with active energy ray-curable ink compositions have been widely utilized in recent years. These types of ink compositions contain polymerizable compounds, such as monomers or oligomers, as well as polymerization initiators that can polymerize the polymerizable compounds by irradiation with active energy rays, such as ultraviolet rays or electron beams. The irradiation with active energy rays on the surface of undried sheets printed with these ink compositions can thus polymerize such polymerizable compounds contained in the compositions with each other into a high molecular weight product. As a result, the ink compositions present on the surface of the printed sheets readily transform into non-tacky (i.e., dry) films. Various ink compositions employing such a drying scheme have been proposed (see, for example, PTL 1 and 2). It should be noted that the active energy rays usable in this step includes ultraviolet rays and electron beams, and the ultraviolet rays are often selected in view of the cost of machine and ease for handling.

### CITATION LIST

### PATENT LITERATURES

PTL1: JP 2012-102217A
PTL2: JP 4649952B

### BRIEF DESCRIPTION OF THE INVENTION

### PROBLEMS TO BE SOLVED

For these types of ink compositions, trimethylolpropane triacrylate (hereinafter, also referred to as TMPTA) is often used as one of the polymerizable compounds. TMPTA is a trifunctional acrylate monomer, and not only has superior properties but also functions as a low-viscosity reactive solvent; thereby it has been widely used as, for example, a varnish for dissolving resin ingredients constituting ink compositions and a solvent for adjusting the viscosity of ink compositions. However, TMPTA has come to be suspected of harmfulness in recent years, and has been included in the Negative List (NL) defined by the Japan Printing Ink Makers Association. The Negative List includes ingredients the use of which has to be avoided in ink compositions; hence every ink manufacturer produces ink compositions under self-imposed control where the ingredients described in this list should not be used. Products based on the self-imposed control are attached with the "NL Mark", which mark serves as one of the guidelines for users to select ink compositions. Such self-imposed control according to the Japan Printing Ink Makers Association is referred to as the "NL regulation".

Since TMPTA has been included in the Negative List (NL) as mentioned above, it cannot be used under the self-imposed control according to the Japan Printing Ink Makers Association. The present invention has been completed in view of such circumstances, and an object of the present invention is to provide an active energy ray-curable ink composition for offset printing that does not contain TMPTA but exhibits superior properties comparable to the ink composition containing TMPTA.

### MEANS TO SOLVE PROBLEMS

The present inventors have made intensive studies to solve the above problems, and found that an active energy ray-curable ink composition for offset printing including a compound having ethylenically unsaturated bonds and a photopolymerization initiator can achieve comparable curability and printability to ink compositions with ordinary TMPTA, which is not ethylene oxide (EO)-modified, as monomers, wherein the active energy ray-curable ink composition contains at least one selected from the group consisting of diallyl phthalate resin, polyfunctional polyester acrylate, and rosin-modified alkyd resin having an sp value of 9.0 to 11.0 (cal/cm³)^{1/2}, and contains EO-modified TMPTA monomers having one to nine EO units in the molecule. The present invention has been made based on such findings, and provides the following composition.

The present invention provides an active energy ray-curable ink composition for offset printing including a compound having ethylenically unsaturated bonds and a photopolymerization initiator, wherein the active energy ray-curable ink composition is characterized by containing at least one selected from the group consisting of diallyl phthalate resin, polyfunctional polyester acrylate, and rosin-modified alkyd resin having an sp value of 9.0 to 11.0 (cal/cm³)^{1/2}, containing ethylene oxide (EO)-modified trimethylolpropane triacrylate (TMPTA) having one to nine EO units in the molecule as at least part of the compound having ethylenically unsaturated bonds described above, and being substantially free of non-EO-modified TMPTA.

The polyfunctional polyester acrylate is preferably tetra- to hexa-functional.

The number of EO units in the EO-modified TMPTA is preferably three to nine.

The acid value of the rosin-modified alkyd resin is preferably 1 to 50 mg KOH/g.

### ADVANTAGES OF THE INVENTION

The present invention provides an active energy ray-curable ink composition for offset printing exhibiting good properties comparable to ink compositions containing TMPTA, regardless of containing no TMPTA.

One embodiment of the active energy ray-curable ink composition for offset printing according to the present invention will now be described. It should be noted that the present invention is not limited to the following embodiment, and can be implemented with appropriate modifications within the scope of the present invention.

The active energy ray-curable ink composition for offset printing according to the present invention is an ink composition that is applicable in offset lithographic printing, and has the curability by irradiation with active energy rays, such as ultraviolet rays and electron beams. As will be described later, the inventive ink composition contains a compound having ethylenically unsaturated bonds (such as monomers and oligomers) and a photopolymerization initiator, and can be cured through polymerization of the compound having ethylenically unsaturated bonds due to radicals generated from the photopolymerization initiator by the irradiation with active energy rays. Accordingly, the irradiation with active energy rays on the surface of printed matter immediately after printing causes the sticky ink composition to be readily cured into films, which are in the dry state (or tack-free state).

The active energy ray used in the curing of the inventive ink composition may be any one that cleaves chemical bonds of the photopolymerization initiator described later to generate radicals. Examples of the active energy rays include ultraviolet rays and electron beams. Particularly preferred active energy rays are ultraviolet rays from the viewpoint of low machine cost and ease for handling. In the use of ultraviolet rays as the active energy rays, the wavelength of the ultraviolet rays may be appropriately determined depending on the absorption wavelength of the photopolymerization initiator to be employed, and may be 400 nm or less. Examples of the ultraviolet irradiator that generates such ultraviolet rays include metal halide lamps, high-pressure mercury lamps, excimer lamps containing rare gas, and ultraviolet light emitting diodes (LEDs).

The inventive ink composition contains a compound having ethylenically unsaturated bonds and a photopolymerization initiator, and is further characterized by containing at least one selected from the group consisting of diallyl phthalate resin, polyfunctional polyester acrylate, and rosin-modified alkyd resin having an sp value of 9.0 to 11.0 (cal/cm³)^{1/2}, containing ethylene oxide (EO)-modified trimethylolpropane triacrylate (TMPTA) having one to nine EO units in the molecule as at least part of the compound having ethylenically unsaturated bonds described above, and being substantially free of non-EO-modified TMPTA. The inventive ink composition may also contain coloring ingredients (in the present invention, the coloring ingredients may include those that impart white or metallic color to the ink composition). In the case that the inventive ink composition contains coloring ingredients, the ink composition can be used for printing, for example, images and letters, while in the case that the inventive ink composition does not contain coloring ingredients, the ink composition can be used for other applications, such as coating. The inventive ink composition is applicable not only to ordinary printed objects for transmission of information or appreciation, but also to various printing applications based on offset printing, such as package printing. Each ingredient will now be described in sequence.

### [Compound having one or more ethylenically unsaturated bonds]

The compound having one or more ethylenically unsaturated bonds is an ingredient called a monomer or an oligomer that is polymerized by radicals generated from a photopolymerization initiator described later into a high molecular weight. Various polymers having ethylenically unsaturated bonds, which have a higher molecular weight than oligomers, are also commercially available. Such polymers can also be crosslinked with themselves or with the monomers or oligomers into a higher molecular weight. Such polymers may thus be used as compounds having ethylenically unsaturated bonds together with the monomers or oligomers.

The monomer having one or more ethylenically unsaturated bonds can be polymerized into a high molecular weight, as described above. In many cases, the monomer is a liquid ingredient having a relatively low molecular weight before polymerization and is also used as a solvent for dissolving a resin ingredient into a varnish and for adjusting the viscosity of the ink composition. The inventive ink composition contains ethylene oxide (EO)-modified TMPTA having one to nine EO units in the molecule as such a monomer, that is, at least part of a compound having ethylenically unsaturated bonds, and is substantially free of non-EO-modified TMPTA.

TMPTA is a compound where a trimethylolpropane molecule and three acrylic acid molecules form ester bonds, and has three acryloyl groups having ethylenically unsaturated bonds, as represented by the following chemical formula. EO-modified TMPTA is a compound having EO units (-CHzCHzO-) between oxygen atoms derived from trimethylolpropane and acryloyl groups, as represented by the following chemical formula.

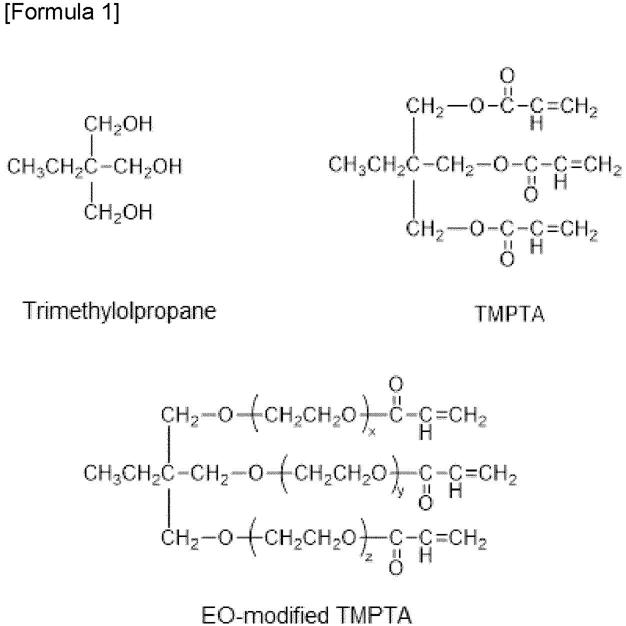

According to the present invention, EO-modified TMPTA containing one to nine ethylene oxide units is used in the molecule, thereby in the above chemical formula, each of x, y, and z are integer above zero, and x+y+z is one to nine. Trimethylolpropane has three hydroxyl groups, and the EO units may be bonded to these three hydroxyl groups in any scheme as long as x+y+z satisfies one to nine as described above. For example, the EO units may be present in a nonuniform mode where the EO units are unevenly bonded to one or two hydroxyl groups and not bonded to the remaining hydroxyl groups, or present in a uniform mode where the EO units are evenly bonded to the respective hydroxyl groups. If the number of EO units in the EO-modified TMPTA (i.e., x+y+z in the above chemical formula) exceeds nine, the ink layer after the curing of ink composition will have reduced rubbing resistance. The number of EO units in EO-modified TMPTA (i.e., x+y+z in the above chemical formula) is preferably three to nine. The average number of EO units contained in each molecule is used as the number of EO units contained in the molecule defined in the present invention. The content of EO-modified TMPTA in the ink composition is preferably 20 to 70 mass%, more preferably 20 to 50 mass%, further more preferably 30 to 50 mass%.

The inventive ink composition contains EO-modified TMPTA as described above, although it is substantially free of non-EO-modified TMPTA. The term "substantially free" means that TMPTA is not intentionally added as part of the ingredients. For example, in the case that EO-modified TMPTA contains non-EO-modified TMPTA as an impurity, the use of such EO-modified TMPTA as raw material may cause unintentional inclusion of non-EO-modified TMPTA in the ink composition. However, even in such a case, it is defined that substantial inclusion of non-EO-modified TMPTA can be avoided.

The inventive ink composition may contain any monomer besides EO-modified TMPTA. Examples of such a monomer include monofunctional monomers having one ethylenically unsaturated bond in the molecule and bi- or higher functional monomers having two or more ethylenically unsaturated bonds in the molecule. The bi- or higher functional monomer can mutually crosslink during the curing of the ink composition, thereby contributing to an increase in curing rate and formation of a rigid film. The monofunctional monomer has no crosslinking ability as described above, thereby contributing to a reduction in curing contraction due to crosslinking. These monomers can be used in combination of several types as needed.

Examples of the monofunctional monomers include alkyl acrylates, such as methyl (meth)acrylate, ethyl (meth)acrylate, butyl (meth)acrylate, hexyl (meth)acrylate, octyl (meth)acrylate, dodecyl (meth)acrylate; and (meth)acrylic acid, ethylene oxide adduct (meth)acrylate, propylene oxide adduct (meth)acrylate, isobornyl (meth)acrylate, cyclohexyl (meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, di(ethylene glycol) mono(meth)acrylate, tri(ethylene glycol) mono(meth)acrylate, poly(ethylene glycol) mono(meth)acrylate, di(propylene glycol) mono(meth)acrylate, polypropylene glycol) mono(meth)acrylate, glycerol mono(meth)acrylate, acryoloxyethyl phthalate, 2-(meth)acryloyloxyethyl-2-hydroxyethyl phthalate, 2-(meth)acryloyloxypropyl phthalate, β-carboxyethyl (meth)acrylate, (meth)acrylic acid dimer, ω-carboxypolycaproiactone mono(meth)acrylate, dimethylaminoethyl (meth)acrylate, diethylaminoethyl (meth)acrylate, N-vinylpyrrolidone, N-vinylformamide, (meth)acryloylmorpholine, and vynylmetyl oxazolidinone. These monofunctional monomers may be used alone or in combination. Throughout the specification, the term "(meth)acrylate" indicates "acrylate and/or methacrylate", and the term "(meth)acrylic acid" indicates "acrylic acid and/or methacrylic acid".

Examples of the di- or higher functional monomers include difunctional monomers, such as ethylene glycol di(meth)acrylate, di(ethylene glycol) di(meth)acrylate, tri(ethylene glycol) di(meth)acrylate, poly(ethylene glycol) di(meth)acrylate, propylene glycol di(meth)acrylate, di(propylene glycol) di(meth)acrylate, tri(propylene glycol) di(meth)acrylate, polypropylene glycol) di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentane di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, tricyclodecane dimethylol dicaplolactonate di(meth)acrylate, bisphenol A tetra(ethylene oxide) adduct di(meth)acrylate, bisphenol F tetra(ethylene oxide) adduct di(meth)acrylate, bisphenol S tetra(ethylene oxide) adduct di(meth)acrylate, hydrogenated bisphenol A tetra(ethylene oxide) adduct di(meth)acrylate, hydrogenated bisphenol F tetra(ethylene oxide) adduct di(meth)acrylate, hydrogenated bisphenol A di(meth)acrylate, hydrogenated bisphenol F di(meth)acrylate, bisphenol A tetra(ethylene oxide) adduct dicaplolactonate di(meth)acrylate, and bisphenol F tetra(ethylene oxide) adduct dicaplolactonate di(meth)acrylate; and trifunctional monomers, such as glycerol tri(meth)acrylate, trimethylolpropane tricaplolactonate tri(meth)acrylate, trimethylolethane tri(meth)acrylate, trimethylolhexane tri(meth)acrylate, trimethyloloctane tri(meth)acrylate, and pentaerythritol tri(meth)acrylate; and tetra- or higher functional monomers, such as trimethylolpropane tetra(meth)acrylate, pentaerythritol tetra(meth)acrylate, pentaerythritol tetracaplolactonate tetra(meth)acrylate, diglycerol tetra(meth)acrylate, ditrimethylolpropane tetra(meth)acrylate, ditrimethylolpropane tetracaplolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tridipentaerythritol hexa(meth)acrylate, tripentaerythritol hepta(meth)acrylate, tripentaerythritol octa(meth)acrylate, and tripentaerythritol poly(alkylene oxide) hepta(meth)acrylate. Among these monomers, preferred examples include ditrimethylolpropane tetra(meth)acrylate (DITMPTA; tetrafunctional), dipentaerythritol hexa(meth)acrylate (DPHA; hexafunctional), glycerol proxytriacrylate (GPTA; trifunctional), and hexanediol diacrylate (HDDA; difunctional). These di- or higher functional monomers may be used alone or in combination.

Another type of monomer is acrylate of epoxidized vegetable oil prepared through acrylic modification of epoxidized vegetable oil. This acrylate is a compound produced by ring-opening addition polymerization of (meth)acrylic acid to epoxy groups in the epoxidized vegetable oil prepared through epoxidization of double bonds in unsaturated vegetable oil with an oxidizing agent, for example, peracetic acid or perbenzoic acid. The unsaturated vegetable oil indicates triglyceride of at least one fatty acid having at least one carbon-carbon unsaturated bond. Examples of the vegetable oil include hemp seed oil, linseed oil, perilla oil, oiticica oil, olive oil, cocoa oil, kapok oil, kaya oil, mustard oil, apricot oil, tung oil, kukui oil, walnut oil, poppy oil, sesame oil, safflower oil, radish seed oil, soybean oil, hydnocarpus oil, camellia oil, corn oil, rapeseed oil, niger oil, rice-bran oil, palm oil, castor oil, sunflower oil, grape seed oil, almond oil, tall oil, pine seed oil, cottonseed oil, coconut oil, peanut oil, and dehydrated castor oil. Since this type of monomer is derived from the vegetable oil, this serves to increase the amount of biomass ingredients in the ink composition. Several types of acrylates of epoxidized vegetable oil are commercially available and may thus be used.

The oligomer is a polymerized ingredient that has a high molecular weight, as described above. The oligomer inherently has a relatively high molecular weight, and thereby can be used for imparting appropriate viscosity and elasticity to the ink composition. Examples of the oligomers include epoxy-modified (meth)acrylates, such as esters formed by a reaction of (meth)acrylic acid with hydroxyl groups generated after opening of the epoxy rings contained in epoxy compounds, such as epoxy resins, using acids or bases; rosin-modified epoxidized acrylates, such as polyester (meth)acrylates prepared from polyhydric alcohol, polycarboxylic acid, and acrylic acid or methacrylic acid, having ester bonds in the main chain, and having acryloyl groups or methacryloyl groups at the terminals; polyether-modified (meth)acrylates, such as esters formed by a reaction of (meth)acrylic acid with terminal hydroxyl groups of polyethers; and urethane-modified (meth)acrylates, such as esters formed by a reaction of (meth)acrylic acid with terminal hydroxyl groups of condensates of polyisocyanates and polyols. Such oligomers are commercially available under trade names, for example, Evecryl series available from Daicel Cytech Co., Ltd.; CN and SR series available from Sartomer Co., Ltd.; Aronix M-6000 series, 7000 series, 8000 series, Aronix M-1100, Aronix M-1200, and Aronix M-1600 available from Toagosei Co., Ltd.; NK Oligo available from Shin-Nakamura Chemical Co., Ltd; and Miramer series available from Miwon Speciality Chemicals Co., Ltd.. These oligomers can be used alone or in combination.

The polymer having ethylenically unsaturated bonds is an ingredient that increases the molecular weight together with the monomers and oligomers, and has a high molecular weight even before irradiation with active energy rays, thereby enhancing the viscoelasticity of the ink composition. Such a polymer is used, for example, in a form of solution or dispersion in a monomer that is a low-viscosity liquid. Examples of the polymer having ethylenically unsaturated bonds include poly(diallyl phthalate), acrylic resins including unreacted and unsaturated groups, and acryl-modified phenol resins. Among these polymers, poly(diallyl phthalate) can be preferably used because of, in particular, its superior compatibility with the monomers and oligomers described above.

The content of the compound having one or more ethylenically unsaturated bonds in the ink composition is preferably 20 to 70 mass%, more preferably 30 to 60 mass%. Such a range of content of the compound having one or more ethylenically unsaturated bonds results in both high curability and superior printability. Among the compounds having one or more ethylenically unsaturated bonds, the content of the polymer having ethylenically unsaturated bonds is preferably 0 to 50 mass%, more preferably 0 to 30 mass%, further more preferably 0 to 20 mass%. Such a range of content of the polymer preferably results in high curability of the ink composition as well as a reduction in misting through imparting appropriate viscoelasticity to the ink composition.

The inventive ink composition contains at least one selected from the group consisting of the diallyl phthalate resins described above, polyfunctional polyester acrylates selected from the various polyester acrylates descried above, and rosin-modified alkyd resins having an sp value of 9.0 to 11.0 (cal/cm³)^{1/2}.

The diallyl phthalate resins have already been described in the paragraph on the polymer having ethylenically unsaturated bonds, and thereby the description thereof is omitted herein.

The polyfunctional polyester acrylate is one having multiple acryloyl groups selected from various polyester acrylates described in the paragraph on the oligomer having ethylenically unsaturated bonds. Among such polyfunctional polyester acrylates, preferred examples include tetrafunctional to hexafunctional polyester acrylates, and more preferred examples include hexafunctional polyester acrylates from the viewpoint of sufficient reactivity. The polyester acrylates refer to polymers or oligomers having ester bonds in the main chain and acryloyl groups in the main chain or at the terminals of branched chain, and may be prepared from any materials that can construct such a structure.

The rosin-modified alkyd resin having an sp value of 9.0 to 11.0 (cal/cm³)^{1/2} can be employed which is disclosed in, for example, JP 2020-15888A. The sp value in the present invention refers to a solubility parameter determined by turbidimetric titration described in JP 2020-15888A. As described above, the inventive ink composition contains monomers and oligomers as ingredients, and these ingredients exhibit relatively high sp values. As also described above, the rosin-modified alkyd resin used in the present invention has an sp value of 9.0 to 11.0 (cal/cm³)^{1/2}, which exhibits a higher sp value among these types of materials. Based on such a higher value, this rosin-modified alkyd resin exhibits high compatibility with monomers and oligomers; hence, the inventive ink composition also has high compatibility. The sp value of the rosin-modified alkyd resin is more preferably 9.3 to 10.0 (cal/cm³)^{1/2}, further more preferably 9.5 to 10.0 (cal/cm³)^{1/2}. Although the rosin-modified alkyd resin is not included in compounds having ethylenically unsaturated bonds, it will be described herein for convenience of explanation.

The rosin-modified alkyd resin preferably has an acid value of 1 to 50 mg KOH/g. It is preferred that the acid value of 50 mg KOH or less can prevent the occurrence of troubles, such as abnormal emulsification, in the ink composition for offset printing to which the rosin-modified alkyd resin is added. The acid value is preferably 1 to 25 mg KOH, more preferably 1 to 10 mg KOH.

The rosin-modified alkyd resin preferably has a weight average molecular weight of 1,000 to 70,000. In the preferred range, the weight average molecular weight of 1,000 or more can cause higher dispersibility of pigments and impart satisfactory viscoelasticity to the ink composition, and the weight average molecular weight of 70,000 or less can cause higher solubility and ease of handling.

The content of rosin-modified alkyd resin in the ink composition is preferably 5 to 40 mass%, more preferably 10 to 40 mass%, further more preferably 15 to 30 mass%.

### [Photopolymerization initiator]

The photopolymerization initiator is an ingredient that generates radicals by irradiation with active energy rays, and the resultant radicals polymerize the compound having one or more ethylenically unsaturated bonds described above, thereby curing the ink composition. The photopolymerization initiator may be any material that generates radicals by irradiation with active energy rays.

Examples of the photopolymerization initiator include benzophenone, diethylthioxanthone, 2-methyl-1-(4-methylthio)phenyl-2-morpholinopropane-1-one, 4-benzoyl-4'-methyldiphenylsulfide, 1-chloro-4-propoxythioxanthone, isopropylthioxanthone, 2-hydroxy-2-methyl-1-phenylpropane-1-one, 1-hydroxycyclohexylphenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, ethoxy(2,4,6-trimethylbenzoyl)phenylphosphine oxide, and 2-benzyl-2-dimethylamino-1-(morpholinophenyl)-butan-1-one. Such photopolymerization initiators are commercially available under trade names, for example, Irgacure 907, Irgacure 369, Irgacure 184, Irgacure 379, Irgacure 819, and TPO available from BASF; and DETX available from Lamberti S.p.A. These photopolymerization initiators can be used alone or in combination.

The content of the photopolymerization initiator in the ink composition is preferably 1 to 20 mass%, more preferably 2 to 15 mass%, further more preferably 2 to 13 mass%. Such a range of content of the photopolymerization initiator in the ink composition preferably results in sufficient curing of the ink composition and compatibility between satisfactory internal curing and material costs.

### [Coloring ingredient]

Coloring ingredients may be added to the inventive ink composition as needed. The coloring ingredient is added to impart, for example, coloring power and hiding power to the ink composition, and includes coloring pigments, white pigments, and metal powder. Examples of such coloring ingredients include, but not limited to, organic and/or inorganic pigments conventionally employed in ink compositions. The inventive ink composition containing no coloring ingredients is preferably used for applications, such as coating layer.

Examples of the coloring ingredients include yellow pigments, such as Disazo Yellows (Pigment Yellow 12, Pigment Yellow 13, Pigment Yellow 14, Pigment Yellow 17 and Pigment Yellow 1) and Hansa Yellow; magenta pigments, such as Brilliant Carmine 6B, Lake Red C, and Watching Red; cyan pigments, such as phthalocyanine blue, phthalocyanine green and alkali blue; black pigments, such as carbon black; white pigments, such as titanium oxide; and metal powder, such as aluminum paste and bronze powder.

The content of coloring ingredients is, for example, about 1 to 30 mass% in the entire ink composition, although such a content is not essential. Colored ink compositions may also be prepared in combination of other complementary color ingredients or other complementary colored ink compositions.

### [Other ingredients]

The inventive ink composition may further contain any other ingredient, as needed, in addition to the ingredients described above. Examples of such ingredients include extender pigments, resin ingredients, polymerization inhibitors, dispersants, salts such as phosphates, waxes such as polyethylene wax, olefin wax and Fischer-Tropsch wax, and alcohols.

The extender pigments impart appropriate properties, such as printability and viscoelasticity to the ink composition, and various types of extender pigments commonly used can be employed in the preparation of the inventive ink composition. Examples of the extender pigments include clay, kaolinite (kaolin), barium sulfate, magnesium sulfate, calcium carbonate, silicon oxide (silica), bentonite, talc, mica, and titanium oxide. The content of extender pigments is, for example, about 0 to 33 mass% in the entire ink composition, although such a content is not essential.

The resin ingredients impart appropriate properties, such as printability and viscoelasticity, to the ink composition. Such resin ingredients include various resins that have been conventionally used in the ink compositions for printing, and preferably have compatibility with monomers and oligomers. Examples of the resin ingredients include styrene-acrylic resins, acrylic resins, alkyd resins, rosin-modified phenol resins, rosin-modified maleic resins, rosin-modified petroleum resins, rosin ester resins, petroleum resin-modified phenol resins, vegetable oil-modified alkyd resins, and petroleum resins.

The content of the resin ingredient in the ink composition is preferably 1 to 30 mass%, more preferably 1 to 20 mass%, further more preferably 1 to 10 mass %. Such a range of content of the resin ingredient preferably imparts appropriate viscoelasticity to the ink composition to prevent the occurrence of misting, and achieves high curability of the ink composition.

Examples of the polymerization inhibitor preferably include phenol compounds such as butylhydroxytoluene, tocopherol acetate, nitrosamine, benzotriazole, and hindered amine. More preferred is butylhydroxytoluene. The addition of such polymerization inhibitors to the ink composition can prevent an increase in viscosity of the ink composition caused by the progress of polymerization reaction during storage. The content of the polymerization inhibitor is, for example, about 0.01 to 1 mass% in the ink composition.

The dispersant is used to improve the dispersion of the coloring ingredients and extender pigments contained in the ink composition. Various types of dispersants are commercially available, for example, DISPERBYK^{™} series available from BYK Japan KK.

The inventive ink composition can be produced with the ingredients described above by a commonly known process. For example, such a process involves the following steps of: mixing the ingredients; kneading the ingredients with, for example, a bead mill or a three-roll mill to disperse the pigments (i.e., the coloring ingredients and the extender pigments); optionally adding additives (e.g., polymerization inhibitors, alcohols and waxes); and then adjusting the viscosity by the addition of monomer ingredients and oil ingredients. The viscosity of the ink composition is, for example, 10 to 70 Pa·s as measured with a Laray viscometer at 25°C, although such a value is not essential.

### EXAMPLES

The present invention will be described in further detail by way of the following examples, although the present invention should not be limited to these examples.

Ink compositions of Examples 1 to 7 and Reference Example 1 were prepared in accordance with the formulations shown in Table 1, and Comparative Examples 1 to 4 in Table 2. The amounts on the formulations shown in Tables 1 and 2 are represented by parts by mass. In the preparation of these ink compositions, materials described in the column "Resin" and the column "Monomer 1" of Tables 1 and 2 were mixed in predetermined parts by mass, and each mixture was heated at 100°C for 60 minutes to give a varnish. The varnish was subsequently mixed with the remaining materials in predetermined parts by mass and the mixture was kneaded in a three-roll mill to yield an ink composition.

The specifications of the materials listed in Tables 1 and 2 are as follows.
"Carmine 6B": Brilliant Carmine 6B (Pigment red 57:1)
"Rosin-modified alkyd resin A": rosin-modified alkyd resin having an sp value of 9.7
"Rosin-modified alkyd resin B": rosin-modified alkyd resin having an sp value of 8.8
"Diallyl phthalate resin": A-DAP available from Osaka Soda Co., Ltd.
"Polyester acrylate": EBECRYL870 (hexafunctional polyester acrylate) available from Daicel-Allnex Ltd.
"Petroleum resin": Nisseki Neopolymer 120 available from ENEOS Corporation
"3EO-TMPTA": TMPTA having three EO units in one molecule
"6EO-TMPTA": TMPTA having six EO units in one molecule
"9EO-TMPTA": TMPTA having nine EO units in one molecule
"12EO-TMPTA": TMPTA having twelve EO units in one molecule
"3PO-TMPTA": TMPTA having three propylene oxide (PO; chemical formula - CH₂-CH(CH₃)-O-) units in one molecule
"DPHA": dipentaerythritol hexaacrylate (hexafunctional monomer)
"Photopolymerization initiator 1": 2,4,6-trimethylbenzyl-diphenylphosphine oxide
"Photopolymerization initiator 2": 4,4'-bis(diethylamino)benzophenone

In the preparation of each ink composition as described above, the formulation in Comparative Example 2 lacked sufficient compatibility to produce a vanish, and thereby an ink composition was not able to be prepared. The following evaluations were therefore skipped for Comparative Example 2.

### [Evaluation of rubbing resistance]

Ink compositions of Examples, Reference Example, and Comparative Examples were each coated on art paper (Toku Art 110K, available from Mitsubishi Paper Mills Ltd.) in a density of 0.1 mL/204 cm² using an RI-2 drawdown machine (Two-split roll, manufactured by Akira Co., Ltd.) to prepare test pieces. Each test piece was then irradiated with ultraviolet rays using a metal halide lamp having a power of 160 W/cm (focal length: 13 cm, light condensing type, single lamp; manufactured by Heraeus Holding GmbH) to cure the ink composition into a tack-free state. The resultant test piece was left at room temperature for 24 hours, and then evaluated for the rubbing resistance using a Gakushin type rubbing fastness tester. The conditions of evaluation for rubbing resistance included ten reciprocal rubbing operations with a weight of one kg and use of art paper as backing paper. The criteria for evaluation are as follows, and the results are shown in the column "Rubbing resistance" of Tables 1 and 2.
S: The coated surface was not removed even after the ten or more reciprocal rubbing operations;
A: The coated surface was removed after the five to nine reciprocal rubbing operations;
B: The coated surface was removed after two to four reciprocal rubbing operations; and
C: The coated surface was removed after one reciprocal rubbing operation.

### [Evaluation of misting]

The ink compositions of Examples, Reference Example, and Comparative Examples were each 2.62 cc applied on an Inkometer manufactured by Toyo Seiki-Seisaku-sho Ltd., and art paper (Toku Art 110K, available from Mitsubishi Paper Mills Ltd.) was placed at the bottom of the Inkometer which was rotated at 1200 rpm for three minutes. Misting was then visually evaluated by the amount of ink composition that was scattered on the art paper. The criteria for evaluation are as follows, and the results are shown in the column "Misting" of Tables 1 and 2.
S: Small amount of the scattered ink composition was observed;
A: Some amount, not causing quality problems, of the scattered ink composition was observed; and
C: Substantial amount, causing quality problems, of the scattered ink composition was observed.

### [Evaluation of transferability]

Ink compositions of Examples, Reference Example, and Comparative Examples were each coated on art paper (Toku Art 110K, available from Mitsubishi Paper Mills Ltd.) in a density of 0.1 mL/204 cm² with an RI-2 drawdown machine (Two-split roll, manufactured by Akira Co., Ltd.). Before and after the coating, the mass of the art paper was measured, and the amount of the ink composition transferred to the art paper was then calculated to evaluate transferability. The criteria for evaluation are as follows using Reference Example 1 as a standard, and the results are shown in in the column "Transferability" of Tables 1 and 2.
S: The transferred amount of the ink composition was 120% or more of that of Reference Example 1;
A: The transferred amount of the ink composition was 110% to less than 120% of that of Reference Example 1;
B: The transferred amount of the ink composition was 90% to less than 110% of that of Reference Example 1: and
C: The transferred amount of the ink composition was less than 90% of that of Reference Example 1

### [Evaluation of dot gain]

Using each of the ink compositions of Examples, Reference Example, and Comparative Examples, a test pattern was printed on art paper (Toku Art 110K, available from Mitsubishi Paper Mills Ltd.) at a printing rate of 1,200 parts/hour using a printing machine (Komori Lithrone LS-426, manufactured by Komori Corporation) and a lithographic CTP plate XPF (manufactured by Fuji Film Corporation). Dampening solution containing 1.5% by volume of KG-502 manufactured by Komori Corporation was used. At a position having a halftone dot area of 50% on the printed matter, the dot gain was measured and evaluated using a densitometer (PDC-LITE2) attached to the printing machine under the condition of Status T (no polarizing filter). The criteria for evaluation are as follows, and the results are shown in the column "Dot gain" of Tables 1 and 2.
A: A dot gain was within the range of 14±3%; and
C: A dot gain was outside the range of 14±3%

### [Evaluation of Initial density and steady density in printing]

In the printing for the evaluation of dot gain described above, the density of the 10th print sheet (initial density) and the density of 200th print sheet (steady density) from the beginning of printing were measured using the densitometer (PDC-LITE2) attached to the printing machine. The conditions for measurement of densities included Status T (no polarizing filter) and white backing. The results are shown in the columns "Initial density" and "Steady density" of Tables 1 and 2.

**[Table 1]**

| | | Example | | | | | | | Reference Example |
|---|---|---|---|---|---|---|---|---|---|
| | | 1 | 2 | 3 | 4 | 5 | 6 | 7 | 1 |
| Pigment | Carmine 6B | 20 | 20 | 20 | 20 | 20 | 20 | 20 | 20 |
| | Calcium Carbonate | 4 | 4 | 4 | 4 | 4 | 4 | 4 | 4 |
| Resin | Rosin-modified alkyd resin A | 25 | 25 | 25 | | | 25 | 23 | 25 |
| | Diallyl phthalate resin | | | | 25 | | | 2 | |
| | Polyester acrylate | | | | | 25 | 5 | | |
| Monomer 1 | 3EO-TMPTA | 30 | | | 30 | 30 | 25 | 30 | |
| | 6EO-TMPTA | | 30 | | | | | | |
| | 9E O-TM PTA | | | 30 | | | | | |
| | TMPTA | | | | | | | | 30 |
| Monomer 2 | DPHA | 5 | 5 | 5 | 5 | 5 | 5 | 5 | 5 |
| Initiator | Photopolymerization Initiator 1 | 9 | 9 | 9 | 9 | 9 | 9 | 9 | 9 |
| | Photopolymerization Initiator 2 | 3 | 3 | 3 | 3 | 3 | 3 | 3 | 3 |
| Wax | Polyethylene wax | 4 | 4 | 4 | 4 | 4 | 4 | 4 | 4 |
| Total | | 100 | 100 | 100 | 100 | 100 | 100 | 100 | 100 |
| Rubbing resistance | | A | A | S | A | S | S | S | A |
| Misting | | S | S | A | S | S | S | S | A |
| Transferability | | A | A | A | A | B | A | A | standard |
| Dot gain | | A | A | A | A | A | A | A | A |
| Initial density | | 1.37 | 1.37 | 1.37 | 1.36 | 1.37 | 1.38 | 1.38 | 1.33 |
| Steady density | | 1.52 | 1.52 | 1.52 | 1.52 | 1.52 | 1.52 | 1.52 | 1.52 |

**[Table 2]**

| | | Comparative Example | | | |
|---|---|---|---|---|---|
| | | 1 | 2 | 3 | 4 |
| Pigment | Carmine 6B | 20 | 20 | 20 | 20 |
| | Calcium Carbonate | 4 | 4 | 4 | 4 |
| Resin | Rosin-modified alkyd resin A | 25 | 25 | | |
| | Rosin-modified alkyd resin B | | | 25 | |
| | Petroleum resin | | | | 25 |
| Monomer 1 | 3EO-TMPTA | | | 30 | |
| | 12EO-TMPTA | 30 | | | |
| | 9EO-TMPTA | | | | |
| | 3PO-TMPTA | | 30 | | 30 |
| Monomer 2 | DPHA | 5 | 5 | 5 | 5 |
| Initiator | Photopolymerization Initiator 1 | 9 | 9 | 9 | 9 |
| | Photopolymerization Initiator 2 | 3 | 3 | 3 | 3 |
| Wax | Polyethylene wax | 4 | 4 | 4 | 4 |
| Total | | 100 | 100 | 100 | 100 |
| Rubbing resistance | | B | - | A | C |
| Misting | | A | - | S | C |
| Transferability | | A | - | C | S |
| Dot gain | | A | - | A | C |
| Initial density | | 1.30 | - | 1.20 | 1.40 |
| Steady density | | 1.52 | - | 1.52 | 1.52 |

It is appreciated that the ink compositions according to the present invention can achieve totally superior results for all the items of evaluation. Although the ink composition of Comparative Example 1 with 12EO-TMPTA also gave relatively high printability, it was not suitable for practical use because of low rubbing resistance. For the ink composition of Example 5, the transferability evaluated as "B" indicates nearly the same as that for Reference Example 1 with TMPTA. These results can demonstrate that the ink compositions according to the present invention exhibit properties equal to or superior to ink compositions containing TMPTA, regardless of containing no TMPTA.

## Claims

1. An active energy ray-curable ink composition for offset printing including a compound having ethylenically unsaturated bonds and a photopolymerization initiator, comprising:
at least one selected from the group consisting of diallyl phthalate resin, polyfunctional polyester acrylate, and rosin-modified alkyd resin having an sp value of 9.0 to 11.0 (cal/cm³)^{1/2}; and
ethylene oxide (EO)-modified trimethylolpropane triacrylate (TMPTA) having one to nine EO units in the molecule as at least part of the compound having ethylenically unsaturated bonds;
wherein the ink composition is substantially free of non-EO-modified TMPTA.

2. The active energy ray-curable ink composition for offset printing according to claim 1, wherein the polyfunctional polyester acrylate is tetra- to hexa-functional.

3. The active energy ray-curable ink composition for offset printing according to claim 1 or 2, wherein the number of EO units in the EO-modified TMPTA is three to nine.

4. The active energy ray-curable ink composition for offset printing according to any one of claims 1 to 3, wherein the rosin-modified alkyd resin has an acid value of 1 to 50 mg KOH/g.
